# EUROPEAN PATENT APPLICATION

(11) **EP 4 814 909 A2**
(43) Date of publication of application: **30.09.2026**
(21) Application number: 26168495.5
(22) Date of filing: 27.03.2026
(51) Int. Cl.: G07C 9/00, A42B 3/30, B60R 25/24

(54) **A HELMET CONTROLLER FOR REMOTELY UNLOCKING A VEHICLE AND A METHOD THEREOF**

(30) Priority: 29.03.2025 IN 202541031082
(71) Applicant: TVS Motor Company Limited, 600006 Chennai (IN)
(72) Inventor: Joshi, Neeraj, 600006 Chennai (IN); Nanjundaswamy, Likith Malavalli, 600006 Chennai (IN)
(74) Representative: Patentanwaltskanzlei Matschnig & Forsthuber OG

(57) **Abstract**

The claimed subject matter discloses a helmet controller 102, a vehicle controller 104, and methods 300, 700 to unlock a vehicle. The method 700 comprises receiving 702 a biometric data transmitted by a helmet controller 102, comparing 704 the received biometric data with at least one pre-stored biometric data, checking 706, when the received biometric data matches with at least one pre-stored biometric data, whether a helmet 103 associated with the biometric data is a registered helmet and unlocking 708 the vehicle 105 if the helmet 103 is a registered helmet.

## Description

### TECHNICAL FIELD

The claimed subject matter in general relates to vehicle access control systems. The claimed subject matter in particular relates to getting accessibility to a vehicle through a smart helmet with a biometric authentication.

### BACKGROUND

Presently, the accessibility to motor vehicles is through a key. In some vehicles, it may be through a mobile app running on a mobile phone.

However, the key, key fob have certain challenges, in that, the key, key fob may be tampered, stolen, duplicated. In such scenarios, unauthorized persons may get access to the vehicle. Also, the signals from the key fob may be captured and replayed later leading to unauthorized access of the vehicle. Similarly, the mobile phone or the application may be manipulated, stolen to get unauthorized access to the vehicle.

For the two wheeled motor vehicle, referred as a vehicle, a rider needs a helmet during a ride for safety. Additionally, the rider needs to carry the key to unlock the vehicle. This causes inconvenience to the rider when he forgets to carry the helmet or the key. Also, the key, key fobs have above mentioned challenges.

Hence, there is a need for a device which provides safety as well as secure access to the vehicle.

The claimed subject matter addresses the above discussed issues.

### SUMMARY

The claimed subject matter is defined in the independent claims. Further details are defined in the dependent claims.

The subject matter discloses a system for remote unlocking of a vehicle. The system comprises a helmet comprising a helmet controller, a vehicle controller in the vehicle and a mobile phone for running an application. The mobile phone is referred as mobile.

In an aspect, the subject matter discloses a helmet controller in a helmet, the helmet controller comprising a processor, a memory and other interfaces to communicate with the vehicle controller.

In an aspect the subject matter discloses a method to provide access to a vehicle, the method performed by a helmet controller. The method comprises detecting a press of a power button on the helmet, determining that the helmet is already registered, receiving a biometric data from a biometric sensor, comparing the received biometric data with at least one pre-stored biometric data and sending the received biometric data to a vehicle controller if the received biometric data matches with at least one pre-stored biometric data.

In an aspect the subject matter discloses a method of preparing a helmet controller for unlocking a vehicle, the method performed by a mobile phone. The method comprises pairing the mobile phone with a helmet controller, receiving a biometric data from the helmet controller, storing the biometric data in the mobile phone, assigning an identifier to the biometric data, storing the identifier in a table T in the mobile phone, updating a status of the identifier as 'Registered helmet' in the table T, pairing with a vehicle controller, sending the biometric data to the vehicle controller and sending a command to the vehicle controller to register the helmet associated with the biometric data.

In an aspect the subject matter discloses a method of registering a helmet, the method performed by a helmet controller. The method comprises detecting a press of a power button on the helmet, determining that the status of the helmet is 'Not registered', pairing with a mobile phone, receiving biometric data from a biometric sensor, sending the biometric data to the mobile phone, storing the biometric data, and updating the status of the helmet as 'Registered helmet'.

In an aspect the subject matter discloses a method of registering a helmet, the method performed by a vehicle controller. The method comprises receiving a biometric data from a mobile phone, receiving a command from the mobile phone to register the helmet associated with the biometric data, assigning an identifier to the biometric data, storing (608) the identifier in a table, and updating the status of the identifier as 'Registered helmet' in the table.

In an aspect the subject matter discloses a method of remotely unlocking a vehicle, the method performed by a vehicle controller. The method comprises receiving a biometric data transmitted by a helmet controller, comparing the received biometric data with at least one pre-stored biometric data, checking, when the received biometric data matches with at least one pre-stored biometric data, whether a helmet associated with the biometric data is a registered helmet and unlocking the vehicle if the helmet is a registered helmet.

In an aspect the subject matter discloses a method to de-register a helmet, the method performed by a mobile phone. The method comprises displaying on the mobile phone, a list of identifiers of registered helmets, selecting an identifier associated with a helmet to be deregistered, updating a status of the identifier as 'De-registered helmet', sending the biometric data associated with the identifier to the vehicle controller and sending a command to the vehicle controller to de-register the helmet associated with the biometric data.

In an aspect the subject matter discloses a method to de-register a helmet, the method performed by a vehicle controller. The method comprises receiving a biometric data, receiving a command indicating that the helmet associated with the biometric data is to be de-registered, comparing the received biometric data with at least one pre-stored biometric data, deleting the biometric data from the pre-stored biometric data which matches with the received biometric data and sending a response to the mobile phone indicating that the helmet associated with the biometric data is de-registered.

### BRIEF DESCRIPTION OF THE DRAWINGS

The detailed description is described with reference to the accompanying figures. In the figures, similar reference numerals are used throughout the drawings to reference like features and components.
Figure 1 illustrates a system for unlocking a vehicle using a helmet, according to one embodiment of the disclosure.
Figure 2 illustrates details of a helmet controller and a vehicle controller.
Figure 3 illustrate a method of accessing a vehicle using a helmet
Figure 4 illustrates a method of preparing the helmet controller and the vehicle controller for unlocking the vehicle using the helmet
Figure 5 illustrates a method of registering a helmet by the helmet controller
Figure 6 illustrates a method of registering a helmet by the vehicle controller
Figure 7 illustrates a method of unlocking the vehicle
Figure 8 illustrates a method of de-registering a helmet by the mobile phone
Figure 9 illustrates a method of de-registering a helmet by the vehicle controller

### DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may indicate a two wheeled motor vehicle. The term 'coupled' is used to indicate coupling between different elements, it may mean directly coupled or indirectly coupled through additional elements. The terms 'module' and 'component' may be used interchangeably. The terms 'Rider' and 'User' may be used interchangeably.

Only the details/components required to describe the claimed subject matter in specific, are disclosed in this document. The details/components which are commonly known or understood by people skilled in the art may not be covered in this document.

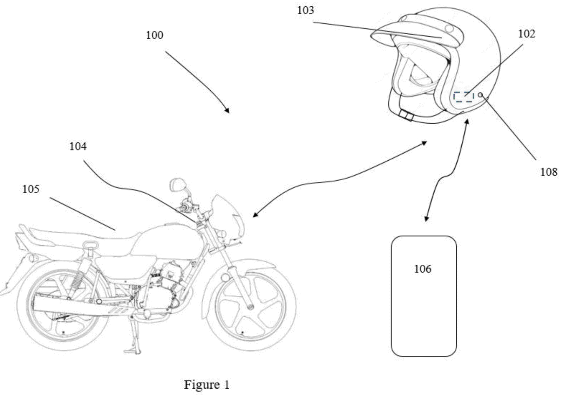

Figure 1 discloses a system 100 for unlocking a vehicle 105 through a smart helmet 103. The system 100 comprises a vehicle controller 102, a smart helmet 103 and a mobile phone 106. The smart helmet 103 is referred as helmet 103. The helmet 103 comprises a controller referred as a helmet controller 102. The mobile phone 106, the helmet controller 102 and the vehicle controller 104 work together or in combination, to register and de-register the helmet 103 with the vehicle 105 and to enable the user to unlock the vehicle 105 using the helmet 103.

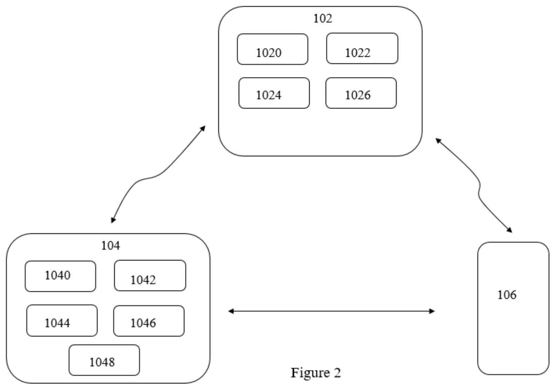

Shown in figure 2 are the internals of the helmet controller 102 and the vehicle controller 104. The helmet controller 102 comprises a processor 1020, a memory 1022 coupled to the processor 1020, a communication unit 1024 and input output interfaces 1026 etc. In an embodiment the communication unit 1024 may be external to the helmet controller 102 and may be connected through the input output interfaces 1026. The input output interfaces 1026 may comprise input ports, output ports, cabling to buttons etc. The vehicle controller 104 comprises similar components as of the helmet controller 102, i.e. the processor 1040, a memory 1042 coupled to the processor 1040, a communication unit 1044 and input output interfaces 1046 etc. In an embodiment the communication unit 1044 may be external to the vehicle controller 104 and may be connected through the input output interfaces 1046. The processor 1020 in the helmet controller 102 and the processor 1040 in the vehicle controller 104 are configured using their control registers, input ports, output ports, input output interfaces, firmware etc. to perform the functionalities descried herein. The vehicle controller 102 comprises a table 1048 in the memory. The table 1048 comprises two columns. The first column is used to store the identifiers of the helmets and the second column is used to store the status of the helmets/identifiers. The identifier may be a number or a name/label to identify a helmet 103. The status of the helmet 103 may be in one of the two states, which are 'Registered helmet' or 'De-registered helmet'. In an embodiment, the helmet controller 102 may comprise a biometric sensor, which could be a finger print sensor, a camera or a voice authentication unit. In an embodiment the biometric sensor may be external to the helmet controller 102. The biometric sensor is placed on the helmet in a location easily accessible to the user. In an embodiment the helmet controller 102 may comprise power button 108. In an embodiment the power button may be external to the helmet controller 102. In an embodiment the helmet controller 102 may comprise a battery. In an embodiment the battery may be external to the helmet controller 102. The communication units 1024 and 1044 handle all the communication between the helmet controller 104, the vehicle controller 102 and the mobile phone 106.

When the helmet controller 102 comprises a biometric sensor, a power button and a battery, the helmet controller 102 may be fitted to any existing helmet 103. The helmet controller 102 may be sold as an accessory to the helmet 103.

The units referred herein may be implemented in hardware or firmware or a combination. For example the communication unit 1024 may comprise standard radio frequency circuits, filters, firmware, input output ports, protocol implementations or a combination of these. The communication unit 1024 establishes communication with the vehicle controller 104 and a mobile phone 106 using wireless technology and standard protocols.

When the helmet 103 is to be used for the first time, it needs to be registered with the vehicle controller 104 and the mobile phone 106. The helmet 103 is provided with the power button 108. The power to the helmet controller 102 may be provided by a battery which is not shown in figure 1.

As a first step, the mobile phone 106, the helmet controller 102 and the vehicle controller 104 need to communicate with each other and establish registration of the helmet 103.

An application is run on the mobile phone 106 to prepare the helmet controller 102 and the vehicle controller 104 for unlocking the vehicle 105. When the helmet 103 is not yet registered, with the vehicle controller 104, the below steps are performed.

The power button 108 is pressed on the helmet 103. The helmet controller 102 detects that the helmet 103 is not yet registered and starts broadcasting a unique identifier. Using the application, the mobile phone 106 pairs with the helmet controller 102. The mobile 106 may use Bluetooth connection or NFC, or any other wireless communication to connect to the helmet controller 102. When the mobile phone 106 pairs with the helmet controller 102, the helmet controller 102 transmits biometric data and the mobile phone receives the biometric data. The received biometric data is stored in the mobile phone 106. An identifier which may be a number or a label/name is assigned to the biometric data and the identifier is stored in a table T in the mobile phone 106. An option may be given to the user to enter the identifier on the mobile phone 106. The status corresponding to the identifier is updated as 'Registered helmet' in the table T. In an embodiment the mobile phone waits for a response from the vehicle controller before updating the status as 'Registered helmet' in the table T. The helmet controller 102 also stores the biometric data. The status of the helmet 103 is updated as 'Registered helmet' in the helmet controller 102. This is done only for the first time when the helmet 103 is new.

As a next step, mobile phone 106 pairs with the vehicle controller 104. The mobile phone 106 may use Bluetooth connection or NFC, or any other wireless communication to connect to the vehicle controller 104. Once the mobile phone 106 is paired with the vehicle controller 104, the biometric data, received earlier form the helmet controller 102, is sent to the vehicle controller 104. The mobile phone 106 also sends a command to the vehicle controller 104 to register the helmet 103 associated with the biometric data. The vehicle controller 104 stores the biometric data, assigns an identifier to the biometric data and stores the identifier in the tale 1048. The status of the identifier is assigned as 'Registered helmet'. The identifier may be a number, a label/name. As there may be multiple helmets authorized to access the vehicle 105, the vehicle controller 104 maintains the table 1048 where each identifier and its status are updated. The status indicating whether the helmet 103 associated with the identifier is 'Registered helmet' or 'De-registered helmet'.

The vehicle controller 104 sends a response to the mobile phone 106 indicating that the helmet 103 associated with the biometric data is registered. The mobile phone 106 also maintains the table T in the phone, where each identifier and their status are maintained. The status indicates whether the helmet 103 associated with the identifier is 'Registered helmet' or 'De-registered helmet'. Once the response is received from the vehicle controller 104, the mobile phone 106 updates the table T with the status as 'Registered helmet'. The mobile application provides an option for the user to enter an identifier which may be a name or a label to the registered helmet 103. If a label/name of the helmet is entered, the same is stored as identifier in the table T in the mobile phone 106, otherwise a number is stored in the table T as identifier in the mobile phone 106.

When the response from the vehicle controller 104 is received by the mobile phone 106, the mobile phone 106 generates a random key and sends the same to the helmet controller 102 and the vehicle controller 104. The random key may be a 128 bit random key. The random key is stored securely in the helmet controller 102 and the vehicle controller 104 for encrypting and decrypting any data transmitted between the helmet controller 102 and the vehicle controller 104.

Now the helmet 103 is ready to unlock the vehicle 105.

When the user wants to unlock the vehicle 105, he presses the power button 108. The helmet controller 102, through the input output interfaces 1026, detects the pressing of the power button 108. The helmet controller 102 checks whether the helmet is registered. If the helmet 103 is not registered, the helmet controller 102 initiates pairing with the mobile phone 106 as explained previously.

Once the helmet controller detects that the helmet 103 is registered, the helmet controller 102 receives a biometric data of the user. The biometric data is received from the biometric sensor on the helmet 103. The received biometric data is compared with at least one pre-stored biometric data. If the received biometric data matches with at least one pre-stored biometric data, the helmet controller 102 encrypts the biometric data using the stored random key and sends the encrypted biometric data to the vehicle controller 104. The vehicle controller 104 receives the biometric data and decrypts it using the stored random key. The biometric data is compared with at least one pre-stored biometric data in the vehicle controller 104. If a match is found, then the status of the identifier associated with the matched biometric data is checked in the table 1048. If the status of the identifier is 'Registered helmet', the vehicle controller 104 unlocks the vehicle 105. If the biometric data does not match or the status of the identifier is 'De-registered helmet', the vehicle controller 104 ignores the communication from the helmet controller 102.

Unlocking the vehicle 105 comprises at least one of unlocking the handle lock and connecting a battery to the fuel injection system of the vehicle 105. Unlocking of the handle lock may be performed by a solenoid. The solenoid is controlled by the input output interfaces 1046 of the vehicle controller 104. Connecting the battery to the fuel injection system of the vehicle 105 may be performed by an electronic switch. Now the vehicle 105 is unlocked and ready for the user to start.

When the helmet 103 which is registered with the vehicle controller 104, is lost, the helmet 103 needs to be de-registered. Also the owner of the vehicle 105 can de-register the helmet 103, at any time. It is done through the same application on the mobile phone 106. The user selects an option in the application on the mobile phone 106 to display the registered helmets from the table T. The list of helmets registered is shown on mobile phone 106 by displaying the identifiers. The identifiers may be numbers, labels or names. The user selects the identifier of the helmet 103 to be de-registered. Once the user confirms, the mobile phone 106 sends the biometric data assigned to the selected identifier to the vehicle controller 104. The mobile phone 106 also sends a command to the vehicle controller 104 to de-register the helmet 103 for which the biometric data is sent. Once the command is received, the vehicle controller 104 deletes the entries of the helmet 103, i.e. the biometric data, the identifier, the status etc. are deleted from the table 1048. After deleting the entries of the helmet 103, a response is sent to the mobile phone 106 indicating that the helmet 103 associated with the biometric data is de-registered. In an embodiment, the biometric data, identifier may be retained in the table 1048 and the status of the identifier is updated as 'De-registered helmet'. Retaining the biometric data and the identifier serves as history of the users for any future analysis. After receiving this response form the vehicle controller 102, the mobile phone 106 updates the status of the helmet 103 which is de-registered by the vehicle controller 104, as 'Deregistered helmet' in table T.

The processors 1020 and 1040 may comprise one or more of central processing units (CPU), digital signal processors (DSP), application specific integrated circuits (ASIC), a controller, field programmable gate arrays (FPGA), or any other hardware device, a firmware device, or any combination of these. The processors are configured using control registers, input output ports, firmware, input output interfaces etc. to perform the operations described herein.

In an embodiment, the memory 1022 and 1042 comprise one or more volatile and nonvolatile memory components which are capable of storing data and instructions to be executed.

In an embodiment, the vehicle controller 104 may be implemented in any existing Electronic Control Unit, ECU, in the vehicle 105.

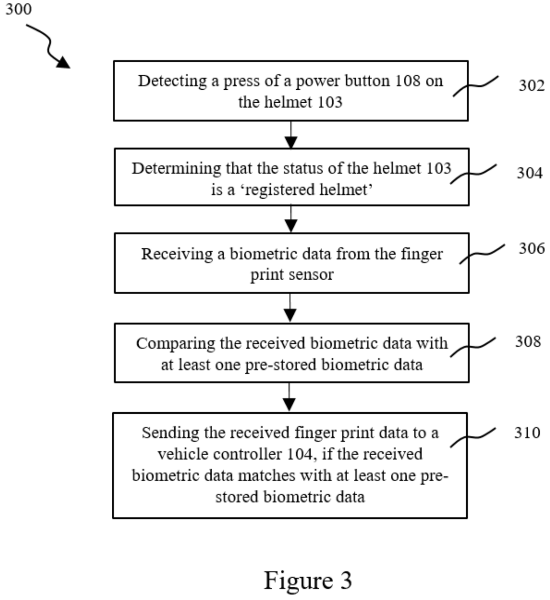

Figure 3 illustrates a method 300 for unlocking the vehicle 105 using the helmet 103. The method 300 is performed by the helmet controller 102. Step 302 comprises detecting a press of a power button 108 on the helmet 103. Step 304 comprises determining that the status of the helmet 103 is a 'registered helmet'. This is done by checking the status. Step 306 comprises receiving a biometric data from the biometric sensor. Step 308 comprises comparing the received biometric data with at least one pre-stored biometric data. Step 310 comprises sending the received biometric data to the vehicle controller 104, if the received biometric data matches with at least one pre-stored biometric data.

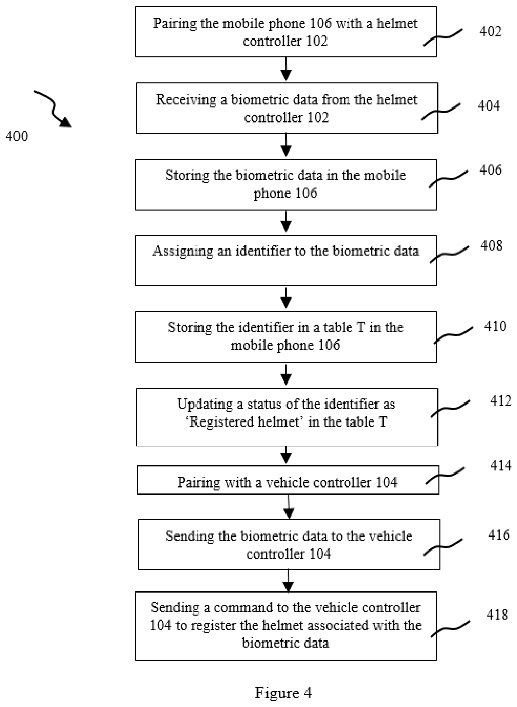

Figure 4 illustrates a method 400 for preparing the helmet 103 and the vehicle 105 for unlocking the vehicle 105 using the helmet 103. The method 400 is performed by the mobile phone 106. Step 402 comprises pairing the mobile phone 106 with the helmet controller 102. Step 404 comprises receiving a biometric data from the helmet controller 102. Step 406 comprises storing the biometric data in the mobile phone 106. Step 408 comprises assigning an identifier to the biometric data. The identifier may be a number, a label or a name. The option may be given to the user to enter a name or label for the biometric data. Step 410 comprises storing the identifier in the table T. Step 412 comprises updating a status of the identifier in the table T, as 'Registered helmet', to indicate that the helmet 103 associated with the biometric data is registered. Step 414 comprises pairing with a vehicle controller 104. Step 416 comprises sending the biometric data to the vehicle controller 104. Step 418 comprises sending a command to the vehicle controller 104 to register the helmet 103 associated with the sent biometric data.

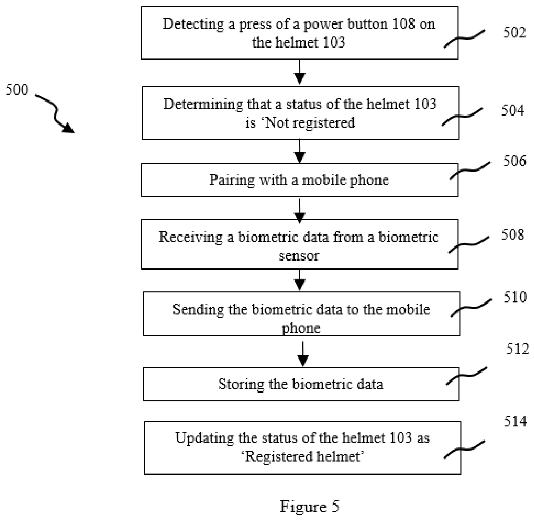

Figure 5 illustrates a method of registering a helmet 103 in the helmet controller 102. The method 500 is performed by the helmet controller 102. Step 502 comprises detecting a press of a power button 108 on the helmet 103. Step 504 comprises determining that a status of the helmet 103 is 'Not registered'. Step 506 comprises pairing with a mobile phone 106. Step 508 comprises receiving a biometric data from a biometric sensor. Step 510 comprises sending the biometric data to the mobile phone 106. Step 512 comprises storing the biometric data. This is referred as pre-stored biometric data. Step 514 comprises updating the status of the helmet 103 as 'Registered helmet'.

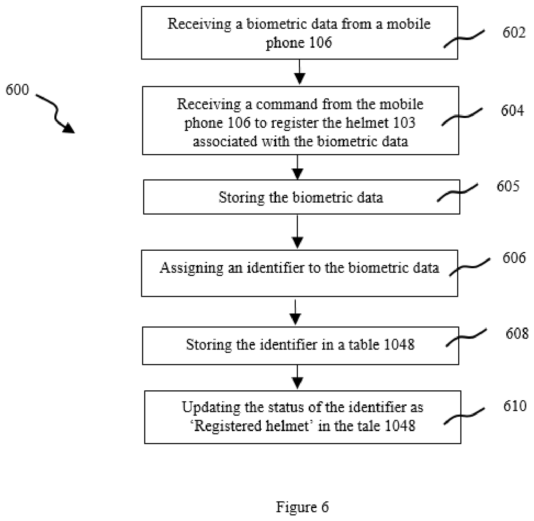

Figure 6 illustrates a method 600 of registering a helmet 103 in the vehicle controller 104. The method 600 is performed by the helmet controller 102. Step 602 comprises receiving a biometric data from a mobile phone 106. Step 604 comprises receiving a command from the mobile phone 106 to register the helmet 103 associated with the biometric data. Step 605 comprises storing the biometric data. This is referred as pre-stored biometric data. Step 606 comprises assigning an identifier to the biometric data. Step 608 comprises Storing the identifier in a table 1048. Step 608 comprises updating the status of the label as 'Registered helmet' in the tale 1048.

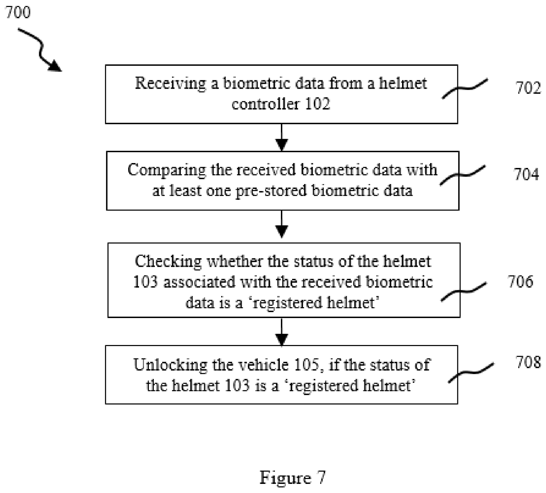

Figure 7 illustrates a method 700 for unlocking the vehicle 105. The method 700 is performed by the vehicle controller 102. Step 702 comprises receiving a biometric data from the helmet controller 102. Step 704 comprises comparing the received biometric data with at least one pre-stored biometric data. Step 706 comprises checking, when the received biometric data matches with at least one pre-stored biometric data, whether the status of the helmet 103 associated with the biometric data is a 'Registered helmet', by reading the status of the identifier associated with the matched biometric data, from the table 1048. Step 708 comprises unlocking the vehicle 105, if the helmet 103 is a registered helmet.

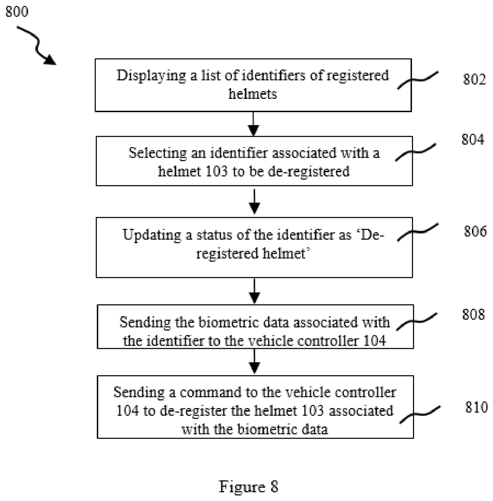

Figure 8 illustrates a method 800 for de-registering a helmet 103 by the mobile phone 106. Step 802 comprises displaying a list of identifiers of the registered helmets. Step 804 comprises selecting an identifier of the registered helmet which needs to be de-registered. Step 806 comprises updating the status of the selected identifier in the table T in the mobile phone 106 as 'De-registered helmet', to indicate that the helmet 103 associated with the selected identifier is de-registered. Step 808 comprises sending the biometric data associated with the selected identifier to the vehicle controller 104. Step 608 comprises sending a command to the vehicle controller 104 to de-register the helmet 103 associated with the biometric data.

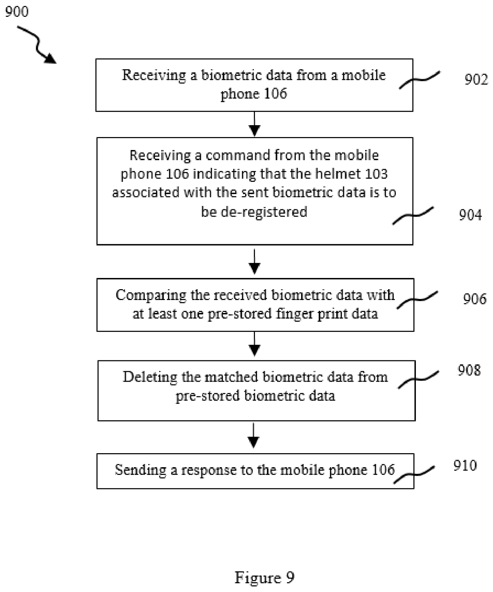

Figure 9 illustrates a method 900 for de-registering a helmet 103 by the vehicle controller 102. The step 902 comprises receiving a biometric data from the mobile phone 106. The step 904 comprises receiving a command from the mobile phone 106 indicating that the helmet 103 associated with the sent biometric data is to be de-registered. The step 906 comprises comparing the received biometric data with at least one pre-stored biometric data. The step 906 comprises deleting the matched biometric data from the pre-stored biometric data. The step 908 comprises sending a response to the mobile phone 106 to indicate that the helmet 103 associated with the sent biometric data is de-registered. After receiving this response from the vehicle controller 104, the mobile phone 106 updates the status of the helmet 103 which is de-registered by the vehicle controller, as 'Deregistered helmet' in table T.

The system 100 comprises three devices, i.e. helmet controller 102, vehicle controller 104 and the mobile phone 106. These three devices need to be paired. The helmet and helmet controller 102 need to be registered and de-registered with the vehicle controller 104 and the mobile phone 106. Hence these devices have their own methods of registering, de-registering and normal functioning. The claimed subject matter covers all these methods and devices for the system to work under different scenarios.

The disclosed subject matter has the following technical advantages.

The disclosed subject matter eliminates the need for carrying physical keys, preventing issues related to key loss, theft, or duplication.

The disclosed subject matter allows riders to remotely disable or replace a lost/damaged helmet and securely pair a new one, preventing unauthorized access to the vehicle.

The disclosed subject matter provided secure method of unlocking the vehicle 105 by checking the authorized finger prints at the helmet and also at the vehicle. This way, it ensures un-authorized persona do not unlock the vehicle 105.

The system 100 continuously monitors for valid helmet signals, ensuring a seamless and secure unlocking experience without requiring repeated manual authentication.

The system 100 can be linked to smartphone applications and cloud-based vehicle security systems, enabling additional functionalities like location tracking, theft alerts, and remote access management.

The system 100 can be customized for various two-wheeler models without requiring major modifications to existing electronic control units.

The disclosed subject matter encourages helmet usage by making it an essential part of the vehicle access system, potentially increasing overall rider safety.

Using Bluetooth Low Energy (BLE) or NFC-based communication ensures minimal battery drain on both the helmet and the vehicle's security system.

### LIST OF REFERENCE NUMERALS

- 100: System to unlock a vehicle using a helmet
- 102: Helmet controller
- 103: Helmet
- 104: Vehicle controller
- 105: Vehicle
- 106: Mobile phone
- 108: Power button on the vehicle
- 1020: Processor in helmet controller
- 1022: Memory in helmet controller
- 1024: Communication unit in helmet controller
- 1026: Interfaces in helmet controller
- 1040: Processor in vehicle controller
- 1042: Memory in vehicle controller
- 1044: Communication unit in vehicle controller
- 1046: Interfaces in vehicle controller
- 1048: Table in the vehicle controller to store the identifier and the status

## Claims

1. A helmet controller (102) in a helmet (103), the helmet (103) to be used for unlocking a vehicle (105), the helmet controller (102) comprising:
a processor (1020); and
a memory (1022) coupled to the processor (1020);
the processor (1020) configured to:
detect a press of a power button (108) on the helmet (103);
determine that the helmet (103) is already registered;
receive a biometric data;
compare the received biometric data with at least one pre-stored biometric data; and
send the received biometric data to a vehicle controller (104), if the received biometric data matches with at least one pre-stored biometric data.

2. The helmet controller (102), as claimed in claim 1, comprising:
a biometric sensor, wherein the biometric sensor is at least one of a fingerprint sensor, a camera and a voice authentication unit;
a power button (108); and
a battery.

3. The helmet controller (102), as claimed in claim 1, comprising a communication unit (1024) configured to communicate with the vehicle controller (104) using at least one of a Bluetooth communication, Near Field Communication and a Wi-Fi communication.

4. A method (300) to provide access to a vehicle (105), the method (300) performed by a helmet controller (102), the method (300) comprising:
detecting (302) a press of a power button (108) on the helmet (103);
determining (304) that the helmet (103) is already registered;
receiving (306) a biometric data from a biometric sensor;
comparing (308) the received biometric data with at least one pre-stored biometric data; and
sending (310) the received biometric data to a vehicle controller (104), if the received biometric data matches with at least one pre-stored biometric data.

5. The method (300) as claimed in claim 4, wherein sending the biometric data to the vehicle controller (104) comprises encrypting the biometric data using a random key before sending.

6. A method (400) of preparing a helmet controller (102) for unlocking a vehicle (105), the method (400) performed by a mobile phone (106), the method (400) comprising:
pairing (402) the mobile phone (106) with a helmet controller (102);
receiving (404) a biometric data from the helmet controller (102);
storing (406) the biometric data in the mobile phone (106);
assigning (408) an identifier to the biometric data;
storing (410) the identifier in a table T in the mobile phone (106);
updating (412) a status of the identifier as 'Registered helmet' in the table T;
pairing (414) with a vehicle controller (104);
sending (416) the biometric data to the vehicle controller (104); and
sending (418) a command to the vehicle controller (104) to register the helmet (103) associated with the biometric data.

7. The method (400) as claimed in claim 6, comprising:
generating a random key to be used for encryption and decryption of data between the helmet controller (102) and the vehicle controller (104);
storing the random key in the mobile phone (106);
sending the random key to the vehicle controller (104);
sending the random key to the helmet controller (102); and
assigning a label in table T to the biometric data.

8. A method (500) of registering a helmet (103), the method performed by a helmet controller (102), the method (500) comprising:
detecting (502) a press of a power button (108) on the helmet (103);
determining (504) that the status of the helmet (103) is 'Not registered';
pairing (506) with a mobile phone (106);
receiving (508) biometric data from a biometric sensor;
sending (510) the biometric data to the mobile phone (106);
storing (512) the biometric data; and
updating (514) the status of the helmet (103) as 'Registered helmet'.

9. A method (600) of registering a helmet (103), the method performed by a vehicle controller, the method comprising:
receiving (602) a biometric data from a mobile phone (106);
receiving (604) a command from the mobile phone (106) to register the helmet (103) associated with the biometric data;
assigning (606) an identifier to the biometric data;
storing (608) the identifier in a table (1048); and
updating (610) the status of the identifier as 'Registered helmet' in the table (1048).

10. A method (700) for remotely unlocking a vehicle (105), the method (500) performed by a vehicle controller (104), the method (500) comprising:
receiving (702) a biometric data transmitted by a helmet controller (102);
comparing (704) the received biometric data with at least one pre-stored biometric data;
checking (706), when the received biometric data matches with at least one pre-stored biometric data, whether a helmet (103) associated with the biometric data is a registered helmet; and
unlocking (708) the vehicle (105), if the helmet (103) is a registered helmet.

11. The method (700) as claimed in claim 10, wherein unlocking the vehicle (105) comprises at least one of unlocking the handle lock of the vehicle (105) and connecting a battery in the vehicle (105) to a fuel injection system in the vehicle (105).

12. A vehicle controller (104) for remotely unlocking a vehicle (105), the vehicle controller (104) comprising:
a processor (1040); and
a memory (1042) coupled to the processor (1040);
the processor (1040) configured to:
receive a biometric data transmitted by a helmet controller (102);
compare the received biometric data with a pre-stored biometric data;
check, when the received biometric data matches with at least one pre-stored biometric data, whether a helmet (103) associated with the biometric data is a 'registered helmet'; and
unlock the vehicle (105), if the helmet (103) is a registered helmet.

13. The vehicle controller (104) as claimed in claim 12, comprising at least one of an unlocking mechanism to unlock a handle lock of the vehicle (105), the unlocking mechanism comprising at least one solenoid and a power supply control mechanism to connect a battery in the vehicle (105) to a fuel injection system in the vehicle (105), to enable a user to start the vehicle (105), the power supply control mechanism comprising at least one electronic switch.

14. A method (800) to de-register a helmet (103), the method performed by a mobile phone (106), the method (800) comprising:
displaying (802), on the mobile phone (106), a list of identifiers of registered helmets;
selecting (802) an identifier associated with a helmet (103) to be de-registered;
updating (804) a status of the identifier as 'De-registered helmet';
sending (806) the biometric data associated with the identifier to the vehicle controller (104); and
sending (808) a command to the vehicle controller (104) to de-register the helmet (103) associated with the biometric data.

15. A method (900) to de-register a helmet (103), the method performed by a vehicle controller (104), the method (900) comprising:
receiving (902) a biometric data;
receiving (904) a command indicating that the helmet (103) associated with the biometric data is to be de-registered;
comparing (906) the received biometric data with at least one pre-stored biometric data;
deleting (908) the biometric data from the pre-stored biometric data which matches with the received biometric data; and
sending (910) a response to the mobile phone (106) indicating that the helmet (103) associated with the biometric data is de-registered.
